(19) Europäisches Patentamt
European Patent Office
Office européen des brevets

(11) **EP 2 138 750 A1**

(12) **DEMANDE DE BREVET EUROPEEN**

(43) Date de publication:
**30.12.2009 Bulletin 2009/53**

(51) Int Cl.:
**F16L 55/027** (2006.01)     **F16L 55/033** (2006.01)

(21) Numéro de dépôt: **08290610.8**

(22) Date de dépôt: **25.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **MAFLOW S.P.A.**
**20090 Trezzano sul Naviglio MI (IT)**

(72) Inventeurs:
 • **Bergami, Andrea**
   **40131 Bologne (IT)**
 • **Angelini, Fabio**
   **63036 Spintoli Ascoli Piceno (IT)**
 • **Tacchinardi, Fabio**
   **20080 Milan (IT)**

(54) **Dispositif atténuateur de perturbations acoustiques à implant souple et circuit de conditionnement incluant un tel dispositif**

(57)     Il s'agit d'un dispositif (9) atténuateur de l'intensité d'au moins une onde générant une perturbation acoustique dans un circuit de conditionnement d'air ou de direction assistée de véhicule automobile, comprenant un tuyau souple (10) et un insert (12) à hélice (22). L'insert (12) est en matériau polymère rigide résistant en température et aux agressions chimiques propre à être inséré dans le tuyau souple et est formé d'une partie centrale cylindrique tubulaire dont la paroi (19) présente des parties (21) de plus faible épaisseur réparties longitudinalement entre les rampes de l'hélice (22) agencées pour permettre une flexion de la paroi par courbure des dites parties (21).

FIG.4

**Description**

La présente invention concerne un dispositif atténuateur de l'intensité d'au moins une onde générant une perturbation acoustique dans un circuit de fluide.

Elle concerne également un circuit de conditionnement d'air comportant un tel dispositif.

Elle trouve une application particulièrement importante bien que non exclusive dans le domaine des dispositifs limitant les bruits générés par un appareil en ligne tel qu'un compresseur dans les circuits de climatisation et/ou les systèmes de direction assistée de véhicule automobile.

On connaît déjà des systèmes pour filtrer les perturbations acoustiques dans les circuits de fluide tels que des circuits de climatisation automobile. Ce sont essentiellement des capacités placées en série sur les circuits à insonoriser.

Les ondes à filtrer arrivant brusquement dans un plus grand volume formé par la capacité, il y a création d'une onde en opposition de phase qui en s'additionnant à l'onde perturbatrice, génère une onde résultante d'amplitude plus faible, ce qui se traduit par une atténuation du bruit.

De tels dispositifs présentent cependant des inconvénients du fait de leur coût de fabrication et de l'encombrement important qu'ils génèrent.

On connaît aussi des dispositifs (WO 2005/035949) utilisant le principe de dérive Quincke. Le principe retenu est cette fois-ci de diviser le fluide en deux ou plusieurs parties et de lui faire parcourir des distances différentes pour obtenir un déphasage des ondes les unes par rapport aux autres et créer ce faisant des ondes d'amplitude plus faible par addition.

En d'autres termes on fait parcourir au flux dérivé une distance différente de celle parcourue par le flux principal véhiculant l'onde perturbatrice dans la section principale de la tuyauterie, par exemple en lui imposant un trajet en spirale le long d'un insert tubulaire traversé axialement par le flux principal.

Si de tels dispositifs peuvent permettre d'excellents résultats d'atténuation avec des pertes de charge acceptables, et ce, pour des longueurs d'insert réduites compatibles avec les dimensions d'une tuyauterie de climatisation ou de direction assistée de véhicule automobile, ils présentent cependant toujours des inconvénients.

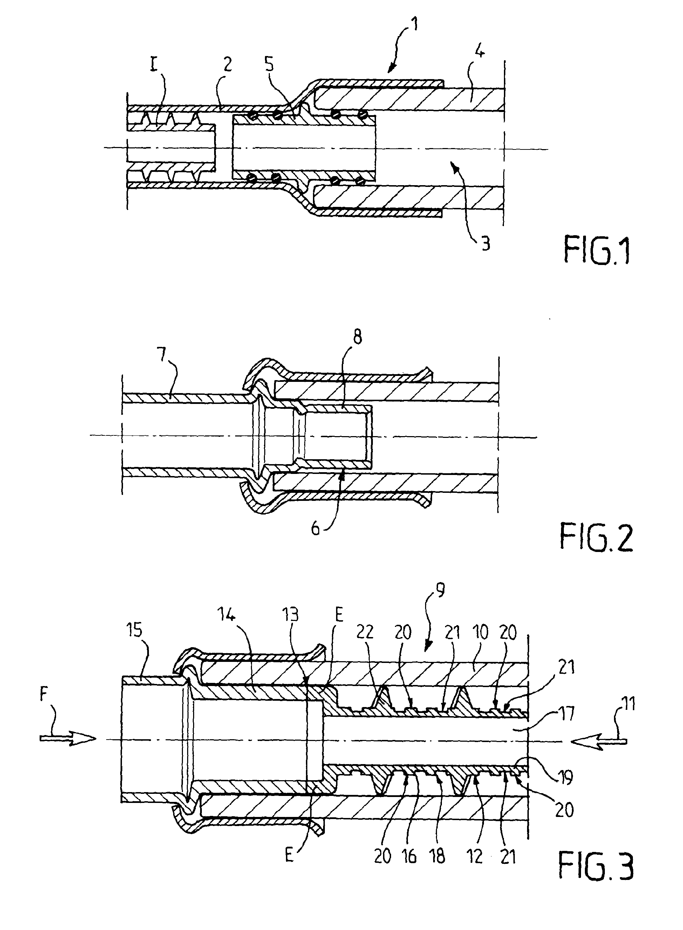

Ils nécessitent en effet de prévoir obligatoirement (figure 1) une extrémité 1 de tube 2 présentant une ouverture 3 plus large que le diamètre du tube lui-même, et ce pour autoriser l'introduction de l'insert I.

L'extrémité 1 est alors sertie sur le tuyau flexible 4, une pièce de jonction intermédiaire 5 devant être prévue.

Des extrémités 6 de tube classique 7 (voire figure 2) sont en effet inutilisables du fait du diamètre de l'embout 8 nécessairement plus petit que celui du tube rigide 7. Il est alors impossible de faire pénétrer l'insert I.

La présente invention vise à fournir un dispositif répondant mieux que ceux antérieurement connus aux exigences de la pratique, notamment en ce qu'elle permet une filtration en ligne optimisée des bruits pour un coût plus faible, le tout avec un moindre encombrement et une plus grande facilité de fabrication et de montage, et ce quelque soit le type d'embout du tube étroit ou élargi.

L'invention part en effet de l'idée de placer l'insert non pas dans le tube rigide mais dans le tuyau flexible, ce qui permet de s'affranchir de la nécessité d'un embout comme celui décrit en référence à la figure 1.

Mais pour ce faire il était nécessaire de concevoir un insert flexible pour s'adapter à la forme courbe du tuyau.

Il existe certes des matériaux polymère à faible module d'Young permettant une telle flexibilité, mais de tels matériaux sont incompatibles avec les pressions et les températures des circuits de climatisation, ce qui excluait une telle solution pour l'homme du métier.

En particulier les températures de validation de ce type de circuit sont de l'ordre de 120°C, correspondant aux températures du compartiment moteur en cas d'arrêt du circuit.

L'invention permet de palier ces inconvénients.

Dans ce but la présente invention propose notamment un dispositif atténuateur de l'intensité d'au moins une onde générant une perturbation acoustique dans un circuit de conditionnement d'air ou de direction assistée de véhicule automobile, comprenant un tuyau souple et un insert à hélice ou spirale, caractérisé en ce que l'insert est en matériau polymère rigide résistant en température et aux agressions chimiques, propre à être inséré dans ledit tuyau souple et est formé d'une partie centrale cylindrique tubulaire dont la paroi présente des parties de plus faible épaisseur répartie longitudinalement entre les rampes de l'hélice, agencées pour permettre une flexion de ladite paroi par courbure des dites parties.

Par polymère rigide résistant en température et aux agressions chimiques, on entend un matériau dont le Module d'Young est supérieur à de l'ordre de 100 MPa à 23°C, par exemple un polymère fabriqué par la société Du Pont sous la dénomination Hytrel 5556 ou Hytrel 4774 présentant une bonne résistance chimique aux fluides du circuit (i.e. huile ou fluide frigorigène) et une bonne tenue à des températures inférieures à de l'ordre de 0°C (circuit en marche) et jusqu'à 120°C (circuit arrêté, composants à la température du compartiment moteur).

Le flux principal du fluide perturbé par l'onde acoustique (on parlera alors de puissance sonore principale véhiculée plutôt que de déplacement du fluide liée au débit) passe par l'intérieur de la partie centrale tubulaire, et le flux secondaire passe à l'extérieur en suivant un trajet en spiral guidé par l'hélice ou rampe hélicoïdale externe.

Le pas de ladite rampe est agencé pour engendrer une onde en opposition ou sensiblement en opposition de phase de l'onde générant la perturbation.

Avantageusement les fréquences principales de l'onde perturbatrice sont comprises entre de l'ordre de 50 Hz et de l'ordre de 2000 Hz et plus particulièrement entre 200 Hz et 800 Hz, du type de celles générant plus habituellement une perturbation acoustique dans un circuit de fluide en compression.

Dans des modes de réalisation avantageux on a de plus recours à l'une et/ou à l'autre des dispositions suivantes :

- La partie centrale cylindrique comporte au moins trois parties de plus faible épaisseur entre chaque rampe successives de l'hélice ;
- l'insert comporte au moins une excroissance d'extrémité, et avantageusement deux excroissances symétriques par rapport à l'axe de l'insert, agencées pour coopérer à contact avec la périphérie de l'embout du tube rigide en vis à vis ;
- la périphérie de la rampe de l'hélice est à léger frottement avec la surface intérieure du tuyau. Par léger frottement on entend une interférence qui permet de garder le contact avec la surface intérieure du tuyau même quand celui-ci est dilaté sous l'effet de la pression du fluide qu'il contient.

Cette interférence provient d'une petite différence de diamètre (par exemple 0,2-0,3 mm) entre l'alésage interne du tuyau et la périphérie externe de l'hélice, entraînant un très léger jeu permettant l'introduction sans effort du dispositif dans le tuyau tout en garantissant un bon maintien sans risque de glissement ou heurt intempestif, quand les axes sont alignés ;

- l'insert est de diamètre intérieur compris entre 7 mm et 10 mm et de longueur comprise entre 50 mm et 140 mm ;
- le pas de l'hélice est compris entre 5 mm et 15 mm ;
- le rapport des sections de passage entre le fluide correspondant au flux principal et le fluide correspondant au flux secondaire est compris entre 30% et 100%.

La présente invention concerne également un circuit de conditionnement d'air comportant au moins une portion de tuyauterie souple munie d'au moins un dispositif à insert du type décrit ci-avant.

La présente invention sera mieux comprise à la lecture de la description qui suit d'un mode de réalisation particulier donné à titre d'exemple non limitatif.

La description se réfère aux dessins qui l'accompagnent dans lesquels :

Les figures 1 et 2 d'ores et déjà décrites, sont des vues en coupe des embouts de tube rigide de l'art antérieur pour jonction avec tuyau flexible.

La figure 3 est une vue en coupe (passant par les deux excroissances symétriques d'extrémité) en position droite du mode de réalisation de l'invention plus particulièrement décrit.

La figure 4 est une vue en coupe en position courbe du mode de réalisation de la figure 3 (la demi coupe supérieure ne passant pas par l'excroissance d'extrémité et la demi coupe inférieure passant par l'excroissance d'extrémité).

La figure 5 montre en perspective latérale de trois quart, le mode de réalisation de l'insert selon l'invention des figures 3 et 4.

La figure 3 montre un dispositif 9 atténuateur de bruit inséré dans un tuyau flexible 10 de circulation de fluide (flèche 11) par exemple frigorigène appartenant à un circuit de climatisation automobile (non représenté).

La circulation du fluide lié au fonctionnement du compresseur est dans le sens de la flèche 11, pour que la chute de pression créée par le débit du fluide permette de pousser le dispositif contre le tube.

Par contre, la propagation de nuisances sonores engendrées par le compresseur (source de vagues de pression) suit le sens inverse (flèche F).

Le dispositif comprend un insert 12 inscrit dans un cylindre dont le diamètre hors tout est sensiblement égal au diamètre interne du tuyau dans laquelle l'insert est introduit à frottement, et bloqué par exemple par serrage externe et/ou par collage ou par tout autre moyen à la portée de l'homme du métier.

Dans le mode de réalisation plus particulièrement décrit, il est simplement bloqué longitudinalement sur l'extrémité 13 de l'embout 14 du tube rigide 15, la pression du fluide assurant ledit blocage, par l'intermédiaire de deux oreilles ou excroissances d'extrémité E symétriques, en forme de cornière rectangulaire dont la face externe coopère avec, et est de même épaisseur, que l'extrémité 13 du tube 15.

La hauteur des excroissances conditionne la section du passage secondaire pour les ondes acoustiques.

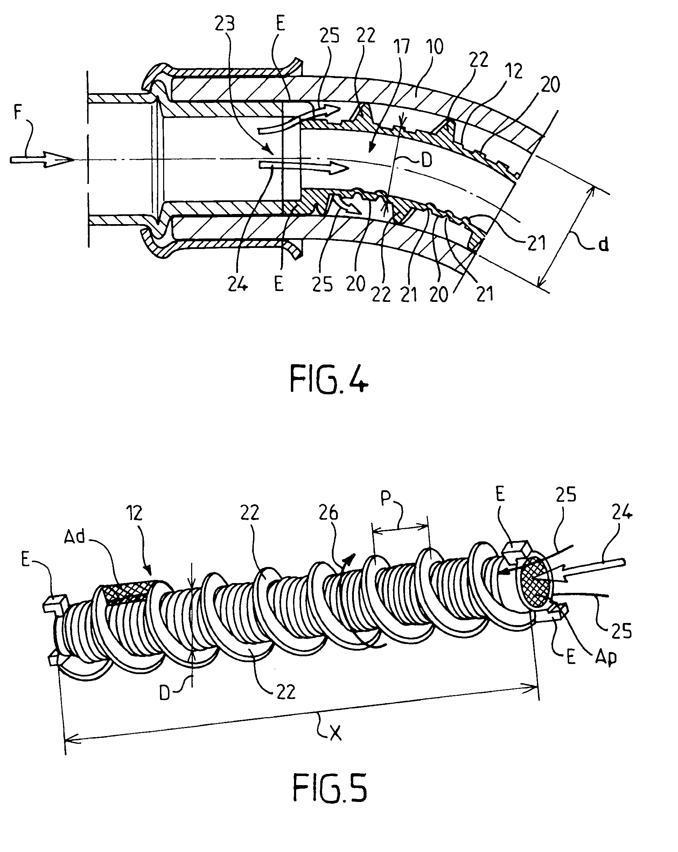

Plus précisément l'insert 12 comprend un noyau ou partie tubulaire centrale cylindrique 16 percée de part en part par un alésage 17 et comprenant une surface périphérique 18 de sa paroi 19 comportant des rainures en relief 20, par exemple circulaires et/ou en spirale, d'épaisseur par exemple 2 mm, définissant entre elles des gorges formant les parties 21 de plus faible épaisseur (par exemple 1 mm), flexibles, ou pliables comme représentées sur la figure 4 en cas de flexion.

Les parties 21 sont avantageusement réparties de façon régulière le long de l'insert.

La paroi 19 comporte de plus une rampe hélicoïdale 22 de pas p.

L'insert est par exemple obtenu par injection plastique à l'aide d'un moule.

En référence à la figure 4, le flux F des ondes acoustiques qui pénètre à l'entrée 23 de l'insert 12 se divise en deux flux, à savoir un premier flux 24 qui passe directement et en ligne droite au travers de l'alésage 17 et qui parcourt une distance X et un deuxième flux 25 qui suit un parcourt hélicoïdal 26 dérivé le long de la rampe 22 en forme d'hélice, sur une longueur L.

La longueur L de la dérive, et donc le pas de l'hélice se calcule en fonction de la fréquence perturbatrice principale à atténuer f, selon la formule suivante :

$$L = \frac{C}{2 \times f} + X$$

avec :

L : longueur de la dérive

C : vitesse du son dans le gaz concerné (Pour le gaz frigorigène R134a, C $\simeq$ 170m/s)

f : fréquence à atténuer

X : longueur de la section principale

A titre d'exemple (voir figures 4 et 5) on a donné ci-après les caractéristiques principales d'un insert pour tuyauterie de diamètre 18 mm pour circuit de climatisation automobile.

Diamètre du tuyau d : 18 mm

Diamètre intérieur de la spirale D : 8 mm (pouvant varier entre de l'ordre de 7 mm et de l'ordre de 10 mm)

Nombre de rampes hélicoïdales n : 1 (pouvant varier entre 1 et 3)

Pas de l'hélice P : 13 mm (pouvant varier entre de l'ordre de 5 mm et de l'ordre de 15 mm)

Longueur totale X : 120 mm (pouvant varier entre de l'ordre de 50 mm et de l'ordre de 140 mm)

Longueur de la rampe hélicoïdale L : Elle se calcule selon la formule L = N $\times$ [P$^2$ + $\Pi$(D)$^2$]$^{1/2}$ et dépend de la fréquence à filtrer selon la formule décrite ci-avant avec

P = Pas de l'hélice

N = Nombre de pas de l'hélice

D = Diamètre moyen de la spirale

Par conséquent, une fois fixés les paramètres géométriques, l'inconnu N se calcule selon la formule suivante :

$$N = L \: / \: [P^2 + \Pi(D)^2]^{1/2}$$

En replaçant la longueur déterminée par la fréquence perturbatrice principale à atténuer f, il visent :

$$N = \left\{ \frac{C}{2 \times f} + X \right\} \: / \: [P^2 + \Pi(D)^2]^{1/2}$$

Le rapport de la section de la dérive Ad par rapport à la section principale Ap est alors et par exemple : $\approx$ 40% (pouvant varier entre 30% et 100%).

Plus précisément la figure 5 est une vue en perspective de l'insert 12 selon le mode de réalisation de l'invention plus particulièrement décrit. Il comprend par exemple deux extrémités identiques, ce qui permet une fabrication optimisée et un montage indépendant du sens d'introduction de l'insert dans le tuyau.

On va maintenant décrire le fonctionnement du dispositif atténuateur du bruit selon l'invention.

Le fluide, par exemple un fluide de réfrigération de type connu sous la référence R134a pour circuit climatiseur de véhicule automobile, est comprimé par un compresseur générateur de bruit et circule dans le circuit en générant des nuisances sonores à des fréquences ou sur des plages de fréquences déterminées en fonction de la configuration du circuit et des vitesses de circulation.

Pour limiter le bruit du à ces perturbations acoustiques on divise le fluide en deux parties ou flux de façon à faire parcourir aux flux de fluide des distances différentes qui vont, lors de la sortie de l'insert, se trouver déphasées l'une par rapport à l'autre. Du fait de ces déphasages calculés pour se rapprocher autant que faire ce peu de l'opposition de phase on obtient une onde résultante d'amplitude aussi faible que possible, ce qui permet d'atténuer, voir de supprimer le bruit généré dans les tuyauteries.

Comme il va de soi et comme il résulte également de ce qui précède, la présente invention n'est pas limitée aux modes de réalisation plus particulièrement décrits. Elle en embrasse au contraire toutes les variantes et notamment celles où il comporte des parties de plus faible épaisseur en plus grand nombre entre deux rampes adjacentes de l'hélice.

## Revendications

1. Dispositif (9) atténuateur de l'intensité d'au moins une onde générant une perturbation acoustique dans un circuit de conditionnement d'air ou de direction assistée de véhicule automobile, comprenant un tuyau souple (10) et un insert (12) à hélice (22), **caractérisé en ce que** l'insert (12) est en matériau polymère rigide résistant en température et aux agressions chimiques propre à être inséré dans ledit tuyau souple et est formé d'une partie centrale cylindrique tubulaire dont la paroi (19) présente des parties (21) de plus faible épaisseur réparties longitudinalement entre les rampes de l'hélice (22) agencées pour permettre une flexion de ladite paroi par courbure des dites parties (21).

2. Dispositif atténuateur selon la revendication 1, **caractérisé en ce que** l'insert (12) comprend un alésage (17) de circulation du flux principal du fluide perturbé par ladite onde, et au moins une hélice (22) de guidage d'un flux secondaire en spiral de pas agencé pour engendrer une onde en opposition ou sensiblement en opposition de phase avec l'onde générant la perturbation.

3. Dispositif atténuateur selon la revendication 2, **caractérisé en ce que** la partie centrale cylindrique comporte au moins trois parties (21) de plus faible épaisseur entre chaque rampe successives de l'hélice.

4. Dispositif atténuateur selon l'une quelconque des revendications précédentes, **caractérisé en ce que** l'insert (12) comporte une excroissance E d'extrémité agencée pour coopérer à contact avec la périphérie de l'extrémité (13) du tube rigide (15) en vis à vis.

5. Dispositif atténuateur selon l'une quelconque des revendications 1 à 3, **caractérisé en ce que** l'insert 12 comporte deux excroissances d'extrémité symétriques agencées pour coopérer à contact avec la périphérie de l'extrémité (13) du tube rigide (15) en vis à vis.

6. Dispositif atténuateur selon l'une quelconque des revendications précédentes, **caractérisé en ce que** l'hélice (22) est à léger frottement avec la surface intérieure du tuyau (10).

7. Dispositif atténuateur selon l'une quelconque des revendications précédentes, **caractérisé en ce que** l'alésage (17) est de diamètre intérieur compris entre 7 mm et 10 mm et de longueur comprise entre 50 mm et 140 mm.

8. Dispositif atténuateur selon l'une quelconque des revendications précédentes, **caractérisé en ce que** le pas de l'hélice (22) est compris entre 5 mm et 15 mm.

9. Dispositif atténuateur selon l'une quelconque des revendications précédentes, **caractérisé en ce que** le rapport des sections de passage entre le fluide correspondant au flux principal (24) et le fluide correspondant au flux secondaire (25) est compris entre 30% et 100%.

10. Circuit de conditionnement d'air à faible nuisance acoustique, **caractérisé en ce que** il comporte au moins une portion de tuyau (10) comportant au moins un dispositif (9) atténuateur selon l'une quelconque des revendications 1 à 9.

FIG.1

FIG.2

FIG.3

FIG.4

FIG.5

Europäisches
Patentamt

European
Patent Office

Office européen
des brevets

**RAPPORT DE RECHERCHE EUROPEENNE**

Numéro de la demande

EP 08 29 0610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 364 055 B1 (PURDY ALAN H [US]) 2 avril 2002 (2002-04-02) * figure 1 * ----- | 1-10 | INV. F16L55/027 F16L55/033 |
| A | FR 2 860 854 A (MANULI AUTO FRANCE [FR]) 15 avril 2005 (2005-04-15) * abrégé; figure 1 * ----- | 1-10 | |
| A | US 3 948 349 A (BYCHINSKY WILFRED A) 6 avril 1976 (1976-04-06) * figure 1 * ----- | 1-10 | |

**DOMAINES TECHNIQUES RECHERCHES (IPC)**

F16L
F01N
F24F

Le présent rapport a été établi pour toutes les revendications

| Lieu de la recherche | Date d'achèvement de la recherche | Examinateur |
|---|---|---|
| Munich | 3 décembre 2008 | Dauvergne, Bertrand |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 29 0610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-12-2008

| Document brevet cité au rapport de recherche | | Date de publication | Membre(s) de la famille de brevet(s) | | Date de publication |
|---|---|---|---|---|---|
| US 6364055 | B1 | 02-04-2002 | AUCUN | | |
| FR 2860854 | A | 15-04-2005 | EP | 1671015 A1 | 21-06-2006 |
| | | | WO | 2005035949 A1 | 21-04-2005 |
| US 3948349 | A | 06-04-1976 | AUCUN | | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005035949 A